(19)

Europäisches
Patentamt

European
Patent Office

Office européen
des brevets

(11)  **EP 4 437 866 A1**

(12)  **EUROPEAN PATENT APPLICATION**
published in accordance with Art. 153(4) EPC

(43) Date of publication:
**02.10.2024  Bulletin 2024/40**

(21) Application number: **22916663.2**

(22) Date of filing: **26.12.2022**

(51) International Patent Classification (IPC):
*A24D 3/06* (2006.01)    *D01F 2/00* (2006.01)
*D01D 5/06* (2006.01)    *D01D 5/22* (2006.01)
*B01D 39/18* (2006.01)   *A24D 3/08* (2006.01)

(52) Cooperative Patent Classification (CPC):
**A24D 3/06; A24D 3/08; A24D 3/10; B01D 39/18;
D01D 5/06; D01D 5/22; D01F 2/00**

(86) International application number:
**PCT/KR2022/021313**

(87) International publication number:
**WO 2023/128522 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.12.2021  KR 20210190179**

(71) Applicants:
• **Kolon Industries, Inc.**
  **Seoul 07793 (KR)**
• **KT&G Corporation**
  **Daedeok-gu**
  **Daejeon 34337 (KR)**

(72) Inventors:
• **JIN, Sang Woo**
  **Seoul 07793 (KR)**

• **JEONG, Jong Cheol**
  **Seoul 07793 (KR)**
• **LEE, Jeong Hun**
  **Seoul 07793 (KR)**
• **SEO, Seung Dong**
  **Seoul 07793 (KR)**
• **HWANG, Yeong Nam**
  **Seoul 07793 (KR)**
• **MA, Kyengbae**
  **Daejeon 34128 (KR)**
• **YANG, Jin-Chul**
  **Daejeon 34128 (KR)**
• **CHEONG, Bong Su**
  **Daejeon 34128 (KR)**
• **HA, Sunghoon**
  **Daejeon 34128 (KR)**

(74) Representative: **Ter Meer Steinmeister & Partner
Patentanwälte mbB
Nymphenburger Straße 4
80335 München (DE)**

(54) **LYOCELL MATERIAL, CIGARETTE FILTER, AND RESPECTIVE MANUFACTURING METHODS THEREFOR**

(57)    Provided are a lyocell material for a filter for a cigarette, a filter for a cigarette including the lyocell material, and methods of manufacturing these. The lyocell material and the filter for a cigarette including the same replace cellulose acetate materials and filters in the art, and not only have excellent biodegradability, but also provide excellent filter manufacturing processability and excellent cigarette physical properties (e.g. draw resistance).

EP 4 437 866 A1

**Description**

Technical Field

Cross-Reference with Related Applications

This application claims the benefit of priority based on Korean Patent Application No. 10-2021-0190179, dated December 28, 2021, and all contents disclosed in the document of the Korean Patent Application are included as part of this specification.

Technical Field

This application relates to a lyocell material, a filter for a cigarette including the same, and a method of manufacturing these.

Background Art

Cellulose acetate fiber is mainly used as a cigarette filter material. Cellulose acetate is known to be a biodegradable material, but cigarette filters made of cellulose acetate remain in their original form for one to two years even after being disposed in soil, and require a considerable amount of time to be completely biodegraded. Considering the amount and toxicity of tobacco products that are dumped and left in the living environment as well as those that are recovered as waste and landfilled after being used for smoking, it is necessary to further improve the biodegradability of cigarette filters.

On the other hand, since cigarettes are a recreational product enjoyed by inhaling the smoke generated during combustion, the more uniform the concentration of smoking smoke is, the higher the quality that cigarettes may be evaluated to have. One of the items that can be evaluated in relation to the concentration uniformity of smoking smoke is the draw resistance of a filter, and the draw resistance is known to increase in proportion to the increase in filtration efficiency. In other words, cigarette filters with excellent draw resistance not only provide excellent filtration performance against harmful substances but also provide excellent user satisfaction (quality).

Therefore, there is a need to develop filter materials that can replace cellulose acetate materials in the art and achieve filter properties such as draw resistance at a level equivalent to or higher than technology in the art.

Disclosure

Technical Problem

An objective of the present application is to provide a lyocell material that replaces commercially available cellulose acetate for cigarette filters.

Another objective of the present application is to provide a lyocell material for a cigarette filter that is eco-friendly during a manufacturing process thereof and has excellent biodegradability upon disposal.

Another objective of the present application is to provide a lyocell material for a cigarette filter that sufficiently satisfies or improves the characteristics (e.g., draw resistance) of a material for cigarette filters.

Another objective of the present application is to provide a lyocell filter for cigarettes.

Another objective of the present application is to provide a lyocell filter for (ultra) slim cigarettes.

Another objective of the present application is to provide a cigarette including a lyocell filter.

Another objective of the present application is to improve processability related to the manufacturing of the lyocell material, filters, and cigarettes.

The above and other objectives of the present application may all be solved by the disclosure of the present application described in detail below.

Technical Solutions

An embodiment of the present application relates to a method of manufacturing a lyocell material. The lyocell material can be used to manufacture cigarette filters.

Specifically, the method includes spinning a lyocell dope; coagulating spun lyocell dope to obtain a lyocell multifilament; treating the lyocell multifilament with an oil; and a crimp applying process of placing the treated lyocell multifilament in a crimp machine so that steam and roller pressure are applied to the lyocell multifilament.

In the method, one or more of the processes may be performed under conditions controlled such that a single fineness of the filaments constituting the lyocell multifilament (e.g., oil-treated multifilament) is within a preset range. For example, the single fineness of the filaments constituting the lyocell multifilament may be greater than 4.0 denier and 8.0 denier or less.

In the method, the crimp applying process may be performed to satisfy the crimp draft ratio expressed in Expression 1 below:

$$Expression\ 1$$
$$1,01 \leq crimp\ draft\ ratio \leq 1.30$$

Referring to Expression 1, the crimp draft ratio is calculated as $V_1/V_0$, wherein $V_0$ is the movement speed of a filament before the oil-treated multifilament is input into a crimp machine, and Vi is the movement speed of the filament gripped by a roller in the crimp machine.

Hereinafter, the manufacturing method of the lyocell material according to the embodiment of the present application will be described in detail.

Lyocell dope spinning process

This process is a process of spinning a lyocell dope, that is, a lyocell spinning dope including cellulose (or cellulose pulp) and N-methylmorpholine-oxide (NMMO).

Commercially available cellulose acetate filters are pointed out as the main cause of microplastics. However, since the amine oxide-based solvent used in the production of lyocell fibers is recyclable and biodegradable even when disposed of, lyocell materials do not generate any pollutants during the production process. Furthermore, lyocell tow is biodegradable and may be removed within a relatively short period of time, and thus, lyocell is a more environmentally friendly material than cellulose acetate.

In an embodiment, the amount of cellulose in the spinning dope may be 5 wt% to 15 wt% based on 100 wt% of the total weight of the dope. When the amount of cellulose is too small, it is difficult to implement the characteristics of lyocell fiber, and when the amount exceeds the upper limit of the range, it is difficult to dissolve in a solvent. In an embodiment, the amount of cellulose in the spinning dope may be at least 6 wt%, at least 7 wt%, at least 8 wt%, at least 9 wt%, or at least 10 wt%, and the upper limit thereof may be, for example, 14 wt% or less, 13 wt% or less, 12 wt% or less, 11 wt% or less, 10 wt% or less, or 9 wt% or less.

In an embodiment, the spinning dope may include an aqueous solution of N-methylmorpholine-N-oxide (NMMO). The aqueous solution may include, for example, 80 to 95 weight percent of N-methylmorpholine-N-oxide and 5 to 20 weight percent of water, considering the degree of dissolution of cellulose and process temperature.

In an embodiment, the cellulose or cellulose pulp may include an alpha-cellulose of 85 wt% to 97 wt%, based on 100 wt% of the total weight of cellulose.

In an embodiment of the present application, the weight-average degree of polymerization (DPw) of the cellulose may be 600 to 1700.

In the spinning process, the shape of a spinneret for discharging the spinning dope is not particularly limited. For example, a donut-shaped spinneret may be used.

The nozzle temperature of the spinneret, for example, the spinning temperature thereof, may be appropriately selected by a person skilled in the art. Considering that the viscosity of the spinning dope varies depending on the spinning temperature and discharging may not be performed well, the spinning temperature may be, for example, 100°C to 120°C, or 100°C to 110°C.

In an embodiment, the process of spinning the spinning dope may be performed under spinning conditions controlled such that the fineness of a monofilament and/or a multifilament satisfies a preset range. For example, spinning may be performed under controlled spinning conditions such that the single fiber fineness of the filament may be greater than 4.0 denier and 8.0 denier or less. For example, one or more spinning conditions selected from the discharge amount and spinning speed of the spinning dope may be appropriately controlled so that the single fiber fineness of the filament forming the lyocell material satisfies more than 4.0 denier and 8.0 denier or less. In this regard, the single fineness of the filament refers to the fineness of a single monofilament separated from the multifilament. Additionally, in some cases, the total fineness may be controlled to be in a certain range by adjusting the number of filament strands.

In some embodiments, the single fineness of the filament may be, for example, 7.5 denier or less, 7.0 denier or less, 6.5 denier or less, 6.0 denier or less, 5.5 denier or less, 5.0 denier or less, or 4.5 denier or less. The lower limit thereof may be, for example, at least 4.5 denier, at least 5.0 denier, at least 5.5 denier, or at least 6.0 denier. Within these ranges, stable draw resistance implementation and processability of filters for a cigarette may be obtained. In particular, as confirmed in comparative examples described later, when the single fineness of the filament exceeds the upper limits of these ranges, the draw resistance of the cigarette filter may be greatly reduced.

The spinning dope discharged through the spinneret may undergo a coagulation process described later.

(b) Solidification and obtaining multifilaments

In this operation, the spun lyocell spinning dope is coagulated, and lyocell multifilaments may be obtained.

For the coagulation, a method in which the spinning dope comes into contact with air and/or a coagulating liquid may be used.

In an embodiment, the coagulation may include: a first coagulation process of supplying cooling air to the spun lyocell dope; and a second coagulation process of coagulating the first coagulated spinning dope by adding the same to a coagulating liquid.

According to the coagulation method, the lyocell dope discharged from the spinneret may be first coagulated in the space (air gap section) between the spinneret and a coagulation bath. For example, cooling air may be supplied to the air gap section from an air cooling part located inside the spinneret, in the direction from the inside of the spinneret to the outside thereof. In addition, first coagulation may be achieved by a so-called air quenching method or member known in the related field.

In an embodiment, the upper limit of the temperature of the cooling air used for first coagulation may be, for example, 15°C or lower. In some embodiments, the cooling air may be air with a temperature of 14°C or lower, 13°C or lower, 12°C or lower, 11°C or lower, or 10°C or lower. When the temperature exceeds these limits of the temperature, the spinning dope coagulation may not be sufficient and spinning-related processability may not be good.

The lower limit of the cooling air may be determined in consideration of spinning processability and/or cross-sectional uniformity of the filament. For example, when the temperature of the cooling air is less than 4°C, the surface of the spinneret cools, the surface of the filament becomes uneven, and spinning processability also deteriorates. In this aspect, the cooling air may have the temperature of at least 5°C, at least 6°C, at least 7°C, at least 8°C, or at least 9°C.

The degree to which the cooling air is supplied, may be adjusted in consideration of sufficient coagulation, spinning processability, and the effect of the filament on physical properties. For example, air may be supplied to the spinning dope at the air flow rate of 70 $Nm^3/h$ to 300 $Nm^3/h$. In some embodiments, the air flow rate may be at least 100 $Nm^3/h$ or at least 150 $Nm^3/h$, and the upper limit of the air flow rate may be, for example, 250 $Nm^3/h$ or less or 200 $Nm^3/h$ or less.

After the first coagulation as described above, the cooled spinning dope may be supplied to a coagulation tank or bath including the coagulating liquid (second coagulation). For proper coagulation, the temperature of the coagulating liquid may be, for example, 30°C or lower or 25°C or lower. In some embodiments, the temperature of the coagulating liquid may be at least 10°C, at least 15°C, or at least 20°C. When these temperatures are maintained, the coagulation rate may be appropriately maintained.

The type of coagulating liquid for second coagulation as described above is not particularly limited. For example, the coagulating liquid may include one or more of water and N-methylmorpholine-N-oxide (NMMO).

Although not particularly limited, when the coagulating liquid includes water and NMMO, the amount of water in the coagulating liquid may be 60 wt% to 90 wt%, and the amount of NMMO therein may be 10 wt% to 40 wt%. Alternatively, the coagulating liquid may include 70 wt% to 80 wt% of water and 20 wt% to 30 wt% of NMMO. The concentration of this coagulating liquid may be controlled to be maintained constant during the manufacturing process using a sensor or the like.

(c) Washing process

If necessary, the multifilament may be washed after the coagulation and multifilament obtaining processes. Due to the washing, NMMO and/or other impurities remaining in the filament may be removed.

The method of performing washing is not particularly limited. For example, washing may be performed by introducing coagulated lyocell multifilaments into a washing tank using a towing roller. Alternatively, washing may be performed by spraying washing liquid while movement to the next process by a towing roller.

Components of the washing liquid are not particularly limited. For example, the washing liquid may include water, and may further include known other additives.

Additionally, in consideration of reuse after washing, the temperature of the washing liquid used may be adjusted to be 100°C or lower.

(d) Oil treatment process

This process is a process of applying an oil to the surface of the filament to reduce friction applied to the filament and to ensure that the crimp is well formed in the crimp application process described later.

Although there is no particular limitation, the oil treatment may be performed by immersing the multifilament in a bath filled with an oil such that the multifilament is completely submerged in the oil. Alternatively, the oil treatment may be performed by spraying the oil solution while moving to the next process by a towing roller.

In order to ensure that the amount of oil applied to the multifilament is constant after the oil treatment as described above, a process of squeezing out the oil on the surface of the multifilament by using a roll located before and/or after the oil treatment process, may be additionally performed.

In an embodiment, the oil treatment may be performed so that the amount of oil is about 5 wt% or less, based on 100 wt% of the oil-treated multifilament. In some embodiments, the amount of oil in the multifilament which is treated with an oil may be 4 wt% or less, 3 wt% or less, or 2 wt% or less, and may be at least 0.5 wt%, at least 1 wt%, or at least 2 wt%.

The type of available oil is not particularly limited, and any known oil known in the related technical field may be used.

In some cases, the oil may be dried after the oil treatment described above.

In an embodiment of the present application, one or more of the processes may be performed under conditions controlled such that the monofilament and/or multifilament satisfies a desired fineness. For example, the processes may be controlled so that the single fineness of the filament constituting the lyocell multifilament is greater than 4.0 denier and 8.0 denier or less. In this regard, the single fineness of the filament refers to the fineness of a single monofilament separated from the multifilament.

In some embodiments, the single fineness of the filament may be, for example, 7.5 denier or less, 7.0 denier or less, 6.5 denier or less, 6.0 denier or less, 5.5 denier or less, 5.0 denier or less, or 4.5 denier or less. The lower limit thereof may be, for example, at least 4.5 denier, at least 5.0 denier, at least 5.5 denier, or at least 6.0 denier. Within these ranges, stable draw resistance implementation and processability of filters for a cigarette may be obtained. In particular, as confirmed in the comparative examples described later, when the single fiber fineness of the filament exceeds these ranges, the draw resistance of the cigarette filter may be greatly reduced.

Although not particularly limited, the process in which the filament is controlled to have a preset fineness range may be the spinning process described above. Alternatively, all of the spinning, coagulation, washing, and oil treatment processes may be controlled to ensure the single fineness range.

(e) Crimp application process

The crimp application process is a process of applying steam and pressure by a roller to the oil-treated lyocell multifilament to obtain a crimped tow, and may be referred to as a crimping process.

Crimping gives waves to the multifilament and allows the fiber to have bulky characteristics. Crimping may be performed using known crimp machines, such as a stuffer box and/or a steam box, and available crimp machines may be any device that can provide steam pressure or roll pressure, for example.

In an embodiment, the applying a crimp may be performed by supplying steam to the lyocell multifilament to preheat and swell the multifilament, and then pressing the multifilament with a press roller to form a wrinkle in the multifilament. In this regard, a steam box may be used to supply steam, and this steam box may be located in front of a crimp machine.

In an embodiment, the crimp application process may be performed in a manner in which pressing of a multifilament by a press roller and providing with steam may be performed at the same time.

In an embodiment, the crimp application process may be performed by supplying steam to the lyocell multifilament to preheat and swell the multifilament, and then pressurizing the multifilament simultaneously with the steam supply by a press roller.

In an embodiment, the applying a crimp may be performed while applying 0.1 $kgf/cm^2$ to 2.0 $kgf/cm^2$ of steam to the multifilament before inputting into the crimp machine (for example, a press roller). In embodiments of the present application, the steam may be provided, by a steam box, in an amount of 0.2 $kgf/cm^2$, at least 0.3 $kgf/cm^2$, at least 0.4 $kgf/cm^2$, at least 0.5 $kgf/cm^2$, or at least 0.6 $kgf/cm^2$. Additionally, the steam may be provided in an amount of 1.5 $kgf/cm^2$ or less, 1.4 $kgf/cm^2$ or less, 1.3 $kgf/cm^2$ or less, 1.2 $kgf/cm^2$ or less, 1.1 $kgf/cm^2$ or less, or 1.0 $kgf/cm^2$ or less. When the amount of steam provided or pressure is below these ranges, the crimp may not be formed smoothly. In addition, when the amount exceeds the upper limits, the flexibility of the filament is increased and excessive crimp is applied to the filament within the crimp machine, and the filament may not pass through the crimp machine.

In an embodiment, the applying a crimp may be performed while applying a pressure of 1.5 $kgf/cm^2$ to 4.0 $kgf/cm^2$ to the multifilament introduced into the crimp machine by using a roller. In embodiments of the present application, the pressure of at least 1.6 $kgf/cm^2$, at least 1.7 $kgf/cm^2$, at least 1.8 $kgf/cm^2$, at least 1.9 $kgf/cm^2$, at least 2.0 $kgf/cm^2$, at least 2.1 $kgf/cm^2$, at least 2.2 $kgf/cm^2$, at least 2.3 $kgf/cm^2$, at least 2.4 $kgf/cm^2$, or at least 2.5 $kgf/cm^2$ may be applied to the multifilament through a press roller. In some embodiments, the pressure of 3.9 $kgf/cm^2$ or less, 3.8 $kgf/cm^2$ or less, 3.7 $kgf/cm^2$ or less, 3.6 $kgf/cm^2$ or less, 3.5 $kgf/cm^2$ or less, 3.4 $kgf/cm^2$ or less, 3.3 $kgf/cm^2$ or less, 3.2 $kgf/cm^2$ or less, 3.1 $kgf/cm^2$ or less, 3.0 $kgf/cm^2$ or less, 2.9 $kgf/cm^2$ or less, 2.8 $kgf/cm^2$ or less, 2.7 $kgf/cm^2$ or less, 2.6 $kgf/cm^2$

or less, or 2.5 kgf/cm$^2$ or less may be applied. When the pressure of the roller is lower than the lower limits, the number of crimps may not be sufficient. Additionally, when the roller pressure exceeds the upper limits of these ranges, the pressing force may be so strong that the filament may not be smoothly introduced into the crimp machine or may not pass through the stuffer box. By the press roller that provides the pressure, wrinkles may be formed in the multifilament.

In an embodiment, in the applying a crimp, doctor blade that applies a preset pressure to the multifilament may be applied. The doctor blade controls the residence time of the filament inserted into a crimper stuffer box, contributing to the number of crimps (which affects the quality of the tow and filter performance). For example, such a doctor blade may be located in the movement path of the multifilament that is pressed by the roller and then discharged from the roller pressing point.

In an embodiment of the present application, the applying a crimp may be performed by applying, by using a doctor blade, a pressure of 0.1 kgf/cm$^2$ to 2.0 kgf/cm$^2$ to the multifilament that has passed through the roller of the crimp machine. In some embodiments, the pressure applied by the doctor blade may be at least 0.2 kgf/cm$^2$, at least 0.3 kgf/cm$^2$, at least 0.4 kgf/cm$^2$, or at least 0.5 kgf/cm$^2$. In some embodiments, the upper limit of the pressure may be, for example, 1.5 kgf/cm$^2$ or less, 1.4 kgf/cm$^2$ or less, 1.3 kgf/cm$^2$ or less, 1.2 kgf/cm$^2$ or less, 1.1 kgf/cm$^2$ or less, or 1.0 kgf/cm$^2$ or less.

In an embodiment, the applying a crimp may be performed at a temperature of 120°C to 250°C. When the temperature is too low, the crimp shape stabilization effect may not be good, and when the temperature is too high, the concentration of fat in the stuffer box may be increased, making the crimp formation difficult. Therefore, considering these ranges of steam pressure, etc., the temperature may be appropriately controlled to be at least 130 °C, at least 140 °C, or at least 150 °C, and at least 200 °C, at least 180 °C, or at least 160 °C.

As described above, the crimp application process is performed to satisfy the crimp draft ratio expressed by Expression 1 below. In this regard, the pressure applied to the filament introduced into the crimp machine may be caused by a roller.

Expression 1

$$1.01 \leq \text{crimp draft ratio} \leq 1.30$$

Referring to Expression 1, the crimp draft ratio is calculated as $V_1/V_0$, wherein $V_0$ is the movement speed of a filament before the oil-treated multifilament is input into a crimp machine, and Vi is the passing speed of the filament gripped by a roller in the crimp machine. In this regard, the passing speed may refer to the speed at which the multifilament moves between the steam process and/or the press roller process after being inputted into the crimp application process described above (or introduced into the crimp machine).

The method performed under conditions that satisfy Expression 1 above may provide a uniform crimp to the tow. For example, as confirmed in the experiment described later, the upper and lower limits of the crimp number range of the tow calculated by the arithmetic mean of the tow of Examples manufactured under conditions satisfying Expression 1 are confirmed to be closer to each other than those of comparative examples (i.e. ensuring uniformity of tow). Furthermore, the tow according to the present application in which crimps are formed uniformly, can ensure an even arrangement of fibers or fiber strands when manufactured into a cigarette filter. Accordingly, a high level of draw resistance as described later, may be provided.

In addition, the method performed under conditions satisfying Expression 1 above may provide a crimp of a good shape to tow, as confirmed in the experiments described later. Crimped tow with a good shape may improve draw resistance.

On the other hand, when the range of Expression 1 is not satisfied, the tow manufacturing conditions are not appropriate and thus the tow cannot be manufactured, or even when the tow can be manufactured, the manufactured crimp shape is poor, and the processability of the cigarette filter is difficult due to the non-uniformity of the tow. As a result, it is difficult to provide a filter with excellent draw resistance.

(f) Other processes

Appropriate post-processing may be performed after applying the crimp.

In an embodiment, a second oil treatment (g) may be performed additionally. The second oil treatment may prevent static electricity from occurring in the tow and provide flexibility to the tow. The second oil treatment may be performed in the same manner as or in accordance with the oil treatment (d) described above.

In an embodiment, a drying treatment (h) may be additionally performed. The drying may be performed at a temperature of 100 °C to 130 °C, for example. The drying treatment method or method is not particularly limited, and may be performed by known techniques. For example, hot air may be provided to tow, or tow may be allowed to pass through or to be left for a certain period of time in a temperature-controlled room.

According to an embodiment of the present application, due to the method including the applying a crimp as described above, tow having 20 to 50 crimps per inch may be provided. For example, the number of crimps may be at least 25 ea/inch, at least 30 ea/inch, at least 35 ea/inch, at least 40 ea/inch, or at least 45 ea/inch, and the upper limit thereof may be, for example, 45 ea/inch or less, 40 ea/inch or less, 35 ea/inch or less, 30 ea/inch or less, or 25 ea/inch or less. The number of crimps and the uniformity thereof may be adjusted through the crimping process described above, for example, the crimp draft ratio, etc. The crimped tow manufactured according to the manufacturing method of the present application not only has such a number of crimps, but also has the crimps formed uniformly, so when manufactured into a cigarette filter, a high level of draw resistance as described later may be provided.

According to the present application, a lyocell material (tow) may be provided having a fineness appropriate for manufacturing a cigarette filter and securing the function thereof. The total fineness of the tow is a factor related to the amount of filament that can be introduced into the filter wrapper. When the total fineness is too low, a sufficient amount of filament may not be filled into the filter wrapper, which lowers the draw resistance properties. When the total fineness is too high, the amount of filling in the filter wrapper becomes too large, causing the filter wrapper to burst, or difficulties to control the amount of tow filling to achieve the draw resistance required for the filter. In this regard, according to embodiments of the present application, crimped tow having a total fineness of 15,000 denier to 35,000 denier may be provided. For example, the lower limit of the total fineness may be, for example, at least 16,000, at least 17,000, at least 18,000, at least 19,000, or at least 20,000, and the upper limit thereof may be, for example, 30,000 or less, or 25,000 or less.

When the fineness of the tow is outside these ranges, the processability of manufacturing filters for cigarettes as in comparative examples, which will be described later, is not good (continuous process by cutting is impossible), and the amount of tow filled into the filter wrapper when manufacturing filters for cigarettes is too small or too large, and thus, it is difficult to obtain sufficient filter properties (for example, draw resistance). Alternatively, when the total fineness of the tow is outside the ranges, the amount of filling in the filter wrapper becomes too large, causing the filter wrapper to burst, or difficulties to control the amount of tow filling to achieve the draw resistance required for the filter.

In an embodiment of the present application, the fineness of the lyocell multifilament may be controlled to an appropriate value depending on the circumferential size of the filter.

For example, when the lyocell material is used in a (ultra) slim filter (e.g., the circumference of the filter rod is 19 mm or less), the total fineness of the lyocell multifilament may be in the range of 15,000 denier to 25,000 denier. In some embodiments, the total fineness of the lyocell multifilament used in the ultra-slim filter may be at least 16,000 denier, at least 17,000 denier, at least 18,000 denier, at least 19,000 denier, at least 20,000 denier, at least 21,000 denier, at least 22,000 denier, at least 23,000 denier, or at least 24,000 denier, and 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In this case, the single fineness of the lyocell monofilament may be at least 4.5 denier, for example, at least 5.0 denier, at least 5.5 denier, at least 6.0 denier, at least 6.5 denier, at least 7.0 denier, or at least 7.5 denier.

As described above, the present application may provide a lyocell material with a total fineness in these ranges, for example, a fineness that enables obtaining filter performance that is suitable for a (ultra) slim filter.

The total fineness of the tow may be determined by the single fineness of the filament and the number of crimps. In the method of the present application, the single fineness and the number of crimps may be controlled as described above, and therefore, the total fineness of the tow suitable for manufacturing a filter and ensuring the function thereof may be obtained.

An aspect of the present application relates to a lyocell material. The lyocell material may be manufactured through a process that satisfies at least Expression 1.

In some embodiments, the lyocell material may be or include a crimped tow manufactured by inputting the same into a crimp machine so that a crimp is applied under conditions that satisfy the crimp draft ratio expressed in Expression 1 below.

$$\text{Expression 1}$$

$$1.01 \leq \text{crimp draft ratio} \leq 1.30$$

wherein, in Expression 1, the crimp draft ratio is calculated as $V_1/V_0$, wherein $V_0$ is the movement speed of a filament before the multifilament is input into a crimp machine, and Vi is the passing speed of the filament gripped by a roller in the crimp machine.

In an embodiment of the present application, the tow may have 20 to 50 crimps per inch and a total fineness of 15,000 denier to 35,000 denier. More specific numerals are the same as described above.

In an embodiment, the tow, i.e., crimped lyocell multifilament, may have a total fineness of 15,000 denier to 35,000 denier. In some embodiments, the total fineness of the multifilament may be 15,000 denier to 25,000 denier. More specific numerals are the same as described above.

In an embodiment, the single fineness of the filaments constituting the lyocell multifilament may be greater than 4.0 denier and 8.0 denier or less. More specific numerals are the same as described above.

In an embodiment of the present application, as described above, the fineness of the lyocell multifilament may be controlled to an appropriate value depending on the circumferential size of the filter.

For example, when the lyocell material is used in a (ultra) slim filter (e.g., the circumference of the filter rod is 19 mm or less), the total fineness of the lyocell multifilament may be in the range of 15,000 denier to 25,000 denier. In some embodiments, the total fineness of the lyocell multifilament used in the ultra-slim filter may be at least 16,000 denier, at least 17,000 denier, at least 18,000 denier, at least 19,000 denier, at least 20,000 denier, at least 21,000 denier, at least 22,000 denier, at least 23,000 denier, or at least 24,000 denier, and 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In this case, the single fineness of the lyocell monofilament may be at least 4.5 denier, for example, at least 5.0 denier, at least 5.5 denier, at least 6.0 denier, at least 6.5 denier, at least 7.0 denier, or at least 7.5 denier.

In an embodiment, the lyocell material may be manufactured by the lyocell material manufacturing method described above. In some embodiments, it may be manufactured through all of the spinning, coagulation, washing, oil treatment, and crimp processes.

Other descriptions regarding the lyocell material are the same as those described regarding the manufacturing method of the lyocell material. Accordingly, the descriptions will be omitted.

An embodiment of the present application provides a method of manufacturing a filter for a cigarette. The method may be a method including all of the methods of manufacturing the lyocell material.

Specifically, the method includes: spinning a lyocell dope; coagulating the spun lyocell dope to obtain a lyocell multifilament; treating the lyocell multifilament with an oil; a crimp applying process of placing the oil treated lyocell multifilament in a crimp machine so that steam and roller pressure are applied to the lyocell multifilament, and manufacturing a filter by using tow to which crimp is prepared.

In relation to the manufacturing method of the filter for a cigarette (specifically, the lyocell material manufacturing process), at least one of the processes may be performed under conditions controlled such that the fineness of the lyocell multifilament (e.g., oil-treated lyocell multifilament) satisfies a preset range. For example, one or more of the processes included in the method of the present application may be performed under conditions controlled such that the single fineness of the monofilament constituting the multifilament is greater than 4.0 denier and 8.0 denier or less.

Among the processes related to the filter for a cigarette manufacturing method, processes that overlap with those described in the lyocell material described above are omitted because the content is the same.

In a detailed example of the present application, the crimp applying process may be performed to satisfy the crimp draft ratio expressed in Expression 1 below:

$$\text{Expression 1}$$
$$1.01 \leq \text{crimp draft ratio} \leq 1.30$$

wherein, in Expression 1, the crimp draft ratio is calculated as $V_1/V_0$, wherein $V_0$ is the movement speed of a filament before the oil-treated multifilament is input into a crimp machine, and $V_i$ is the passing speed of the filament gripped by a roller in the crimp machine.

In an embodiment, the tow may have 20 to 50 crimps per inch. The detailed description is the same as described above. Thus, corresponding description will be omitted.

The process of manufacturing a filter performed after the crimp application process may be appropriately performed by a person skilled in the art according to known methods. For example, a filter may be manufactured by forming a rod shape with tow-filled wrapper (may be called winding paper, filter paper, or filter wrapper). Alternatively, a filter may be manufactured by cutting filter paper filled with a rod-shaped tow to an appropriate length.

The wrapper may be porous or non-porous paper with which the lyocell tow described above (i.e., tow which is treated with at least an oil and to which a crimp is applied) is wrapped and which is capable of maintaining the shape of a filter (for example, column or cylinder).

In an embodiment, when a porous wrapper is used, the wrapper may have a porosity of 10 Coresta units (CU) to 50,000 CU. Specifically, the lower limit of porosity of the wrapper may be, for example, at least 1000 CU, at least 5000 CU, at least 10000 CU, at least 15000 CU, at least 20000 CU, at least 25000 CU, at least 30000 CU, at least 35000 CU, at least 40000 CU, or at least 45000 CU, and the upper limit thereof may be, for example, 45000 CU or less, 40000 CU or less, 35000 CU or less, 30000 CU or less, 25000 CU or less, 20000 CU or less, 15000 CU or less, 10000 CU or less, or 5000 CU or less.

In an embodiment of the present application, the filter for cigarettes may have a certain shape and size.

For example, the filter may have a rod shape. In some embodiments, the filter for a cigarette may have a cylinder-like shape.

In some embodiments, the filter may have a length of, for example, 10 mm to 150 mm. In some embodiments, the lower limit of the length of the filter may be 20 mm, at least 30 mm, at least 40 mm, at least 50 mm, at least 60 mm, at least 70 mm, at least 80 mm, at least 90 mm, at least 100 mm, at least 110 mm, at least 120 mm, at least 130 mm, at least 140 mm, or at least 150 mm. The upper limit thereof may be 150 mm or less, 140 mm or less, 130 mm or less, 120 mm or less, 110 mm or less, 100 mm or less, 90 mm or less, 80 mm or less, 70 mm or less, 60 mm or less, 50 mm or less, 40 mm or less, 30 mm or less, or 20 mm or less.

In an embodiment of the present application, the filter having these lengths may have a circular cross section, and the circumference of the circular cross section may be within the range of 10 mm to 30 mm. For example, the lower limit of the circumference of the filter may be at least 15 mm, at least 20 mm, or at least 25 mm, and the upper limit thereof may be 25 mm or less, 20 mm or less, or 15 mm or less.

Although there is no particular limitation, before filling the filter paper with tow, the tow may be subjected to opening or a plasticizer treatment.

In an embodiment, the filter for a cigarette manufactured according to the method may satisfy the draw resistance of at least 375 mmH$_2$O, which is measured according to KS H ISO 6565. In some embodiments, the draw resistance of the filter for a cigarette may be at least 380 mmH$_2$O, at least 390 mmH$_2$O, at least 400 mmH$_2$O, at least 410 mmH$_2$O, at least 420 mmH$_2$O, at least 430 mmH$_2$O, at least 440 mmH$_2$O, at least 450 mmH$_2$O, at least 460 mmH$_2$O, or at least 470 mmH$_2$O. The upper limit of the draw resistance may be, for example, 810 mmH$_2$O or less. In some embodiments, the upper limit of the draw resistance may be, for example, 800 mmH$_2$O or less, 750 mmH$_2$O or less, 700 mmH$_2$O or less, 650 mmH$_2$O or less, 600 mmH$_2$O or less, 550 mmH$_2$O or less, 500 mmH$_2$O or less, 450 mmH$_2$O or less, or 400 mmH$_2$O or less.

Although not particularly limited, the draw resistance may be measured for a filter rod with a circumference of 10 mm to 30 mm or 15 mm to 27 mm. The circumference of the filter for a cigarette may be determined based on the number of crimps of the tow, the quality of the tow (e.g., uniformity of crimp shape), etc., and the draw resistance may be determined by the fineness and cross-sectional shape.

Although not particularly limited, the draw resistance may be measured for a filter rod that includes a wrapper with a porosity of 5000 CU to 15000 CU and has a length in the range of 60 mm to 150 mm.

Although not particularly limited, the draw resistance may be measured for a rod-shaped filter having the weight of 300 mg to 1000 mg, 400 mg to 900 mg, 500 mg to 800 mg, or 600 to 700 mg.

As described above, the present application may provide a lyocell material with these ranges of a fineness, for example, a fineness that enables obtaining filter performance that is suitable for a (ultra) slim filter. A cigarette filter including such a lyocell material may have a desired draw resistance.

For example, in the case where the lyocell material is used in a (ultra) slim filter (e.g., the circumference of the filter rod is 19 mm or less, specifically, the upper limit of circumference is, for example, 18.5 mm or less, 18 mm or less, 17.5 mm or less, 17 mm or less, or 16.5 mm or less, and the lower limit thereof is, for example, at least 15.0 mm, at least 15.5 mm, at least 16.5 mm, at least 17.0 mm, at least 17.5 mm, at least 18.0 mm, or at least 18.5 mm), the total fineness of the lyocell multifilament may be in the range of 15,000 denier to 25,000 denier. In some embodiments, the total fineness of the lyocell multifilament used in the ultra-slim filter may be at least 16,000 denier, at least 17,000 denier, at least 18,000 denier, at least 19,000 denier, at least 20,000 denier, at least 21,000 denier, at least 22,000 denier, at least 23,000 denier, or at least 24,000 denier, and 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In this case, the single fineness of the lyocell monofilament may be at least 4.5 denier, for example, at least 5.0 denier, at least 5.5 denier, at least 6.0 denier, at least 6.5 denier, at least 7.0 denier, or at least 7.5 denier. For the filter of a cigarette including a lyocell material of this fineness, a draw resistance, which is measured according to KS H ISO 6565, may be at least 375 mmH$_2$O. In some embodiments, the filter for a cigarette may have the draw resistance of at least 380 mmH$_2$O, at least 390 mmH$_2$O, at least 400 mmH$_2$O, at least 410 mmH$_2$O, at least 420 mmH$_2$O, at least 430 mmH$_2$O, at least 440 mmH$_2$O, at least 450 mmH$_2$O, at least 460 mmH$_2$O, at least 470 mmH$_2$O, at least 480 mmH$_2$O, at least 490 mmH$_2$O, at least 500 mmH$_2$O, at least 510 mmH$_2$O, at least 520 mmH$_2$O, at least 530 mmH$_2$O, at least 540 mmH$_2$O, at least 550 mmH$_2$O, at least 560 mmH$_2$O, at least 570 mmH$_2$O, at least 580 mmH$_2$O, at least 590 mmH$_2$O, or at least 600 mmH$_2$O. In this regard, the upper limit of the draw resistance may be, for example, 810 mmH$_2$O or less, or 800 mmH$_2$O or less, 750 mmH$_2$O or less, 700 mmH$_2$O or less, or 650 mmH$_2$O or less.

A filter having these ranges of draw resistance value may provide uniformity of smoke concentration and excellent filter performance when the user smokes a cigarette.

An embodiment of the present application provides a filter for a cigarette. The filter for a cigarette includes a lyocell material, and the lyocell material may be the same as described above.

In some embodiments, the lyocell material may be a crimped tow manufactured by inputting the same into a crimp machine so that a crimp is applied under conditions that satisfy the crimp draft ratio expressed in Expression 1 below.

$$\text{Expression 1}$$

$$1.01 \leq \text{crimp draft ratio} \leq 1.30$$

wherein, in Expression 1, the crimp draft ratio is calculated as $V_1/V_0$, wherein $V_0$ is the movement speed of a filament before the multifilament is input into a crimp machine, and Vi is the passing speed of the filament gripped by a roller in the crimp machine.

In an embodiment of the present application, the tow may have 20 to 50 crimps per inch and a total fineness of 15,000 denier to 35,000 denier. More specific numerals are the same as described above.

In an embodiment, the lyocell material included in the filter for a cigarette may be manufactured by the lyocell material manufacturing method described above. In some embodiments, it may be manufactured through all of the spinning, coagulation, washing, oil treatment, and crimp processes.

In an embodiment, the filter for a cigarette may further include a binder. In other words, the filter for a cigarette may include a lyocell material; and a wrapper surrounding the lyocell material. The description of the wrapper is the same as described above. Thus, corresponding description will be omitted.

The description of the shape of the filter is the same as described above. Thus, corresponding description will be omitted.

In an embodiment, the filter for a cigarette may satisfy the draw resistance of at least 375 mmH$_2$O, which is measured according to KS H ISO 6565. In some embodiments, the draw resistance of the filter for a cigarette may be at least 380 mmH$_2$O, at least 390 mmH$_2$O, at least 400 mmH$_2$O, at least 410 mmH$_2$O, at least 420 mmH$_2$O, at least 430 mmH$_2$O, at least 440 mmH$_2$O, at least 450 mmH$_2$O, at least 460 mmH$_2$O, or at least 470 mmH$_2$O. The upper limit of the draw resistance may be, for example, 810 mmH$_2$O or less. In some embodiments, the upper limit of the draw resistance may be 800 mmH$_2$O or less, 750 mmH$_2$O or less, 700 mmH$_2$O or less, 650 mmH$_2$O or less, 600 mmH$_2$O or less, 550 mmH$_2$O or less, 500 mmH$_2$O or less, 450 mmH$_2$O or less, or 400 mmH$_2$O or less.

Although not particularly limited, the draw resistance may be measured for a filter rod with a circumference of 10 mm to 30 mm or 15 mm to 27 mm. The circumference of the filter for a cigarette may be determined based on the number of crimps of the tow, the quality of the tow (e.g., uniformity of crimp shape), etc., and the draw resistance may be determined by the fineness and cross-sectional shape.

Although not particularly limited, the draw resistance may be measured for a filter rod that includes a wrapper with a porosity of 5000 CU to 15000 CU and has a length in the range of 60 mm to 150 mm.

Although not particularly limited, the draw resistance may be measured for a rod-shaped filter having the weight of 300 mg to 1000 mg, 400 mg to 900 mg, 500 mg to 800 mg, or 600 to 700 mg.

As described above, the present application may provide a lyocell material with these ranges of a fineness, for example, a fineness that enables obtaining filter performance that is suitable for a (ultra) slim filter. A cigarette filter including such a lyocell material may have a desired draw resistance.

For example, when the lyocell material is used in a (ultra) slim filter (e.g., the circumference of the filter rod is 19 mm or less, specifically, when the upper limit of circumference is, for example, 18.5 mm or less, 18 mm or less, 17.5 mm or less, 17 mm or less, or 16.5 mm or less, and the lower limit thereof is, for example, at least 15.0 mm, at least 15.5 mm, at least 16.5 mm, at least 17.0 mm, at least 17.5 mm, at least 18.0 mm, or at least 18.5 mm), the total fineness of the lyocell multifilament may be in the range of 15,000 denier to 25,000 denier. In some embodiments, the total fineness of the lyocell multifilament used in the ultra-slim filter may be at least 16,000 denier, at least 17,000 denier, at least 18,000 denier, at least 19,000 denier, at least 20,000 denier, at least 21,000 denier, at least 22,000 denier, at least 23,000 denier, or at least 24,000 denier, and 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In this case, the single fineness of the lyocell monofilament may be at least 4.5 denier, for example, at least 5.0 denier, at least 5.5 denier, at least 6.0 denier, at least 6.5 denier, at least 7.0 denier, or at least 7.5 denier. For the filter of a cigarette including a lyocell material of this fineness, a draw resistance, which is measured according to KS H ISO 6565, may be at least 375 mmH$_2$O. In some embodiments, the filter for a cigarette may have the draw resistance of at least 380 mmH$_2$O, at least 390 mmH$_2$O, at least 400 mmH$_2$O, at least 410 mmH$_2$O, at least 420 mmH$_2$O, at least 430 mmH$_2$O, at least 440 mmH$_2$O, at least 450 mmH$_2$O, at least 460 mmH$_2$O, at least 470 mmH$_2$O, at least 480 mmH$_2$O, at least 490 mmH$_2$O, at least 500 mmH$_2$O, at least 510 mmH$_2$O, at least 520 mmH$_2$O, at least 530 mmH$_2$O, at least 540 mmH$_2$O, at least 550 mmH$_2$O, at least 560 mmH$_2$O, at least 570 mmH$_2$O, at least 580 mmH$_2$O, at least 590 mmH$_2$O, or at least 600 mmH$_2$O. In this regard, the upper limit of the draw resistance may be, for example, 810 mmH$_2$O or less, or 800 mmH$_2$O or less, 750 mmH$_2$O or less, 700 mmH$_2$O or less, or 650 mmH$_2$O or less.

A filter having these ranges of draw resistance value may provide uniformity of smoke concentration and excellent filter performance when the user smokes a cigarette.

Advantageous Effects

According to the present application, provided are a lyocell material for a filter for a cigarette that can replace commercialized cellulose acetate (CA) and a filter for a cigarette including the same. Particularly, the present application has the effect of providing not only excellent biodegradability, but also excellent filter manufacturing process and excellent tobacco physical properties (e.g., draw resistance).

Mode for Invention

Hereinafter, the operations and effects of the disclosure will be described in more detail through specific examples of the disclosure. However, this is presented as an example of the disclosure, and the scope of the disclosure is not limited thereby.

**Examples and Comparative Examples**

A lyocell material was manufactured through the same process as described in Examples and Comparative Examples below. Conditions not specifically described are within the scope of the above description.

**Example 1**

Cellulose pulp with an alpha-cellulose amount of 93.9% and a weight-average degree of polymerization (DPw) of 820 was mixed with NMMO/$H_2O$ solvent having a propyl gallate amount of 0.01 wt% to prepare a spinning dope for producing filter tow for a cigarette with a concentration of 11 wt%. Then, while the spinning temperature at the spinning nozzle was maintained at 110°C, the discharge amount and spinning speed were adjusted such that the single fineness of the filament was 4.8 denier, and the spinning dope was spun.

The spinning dope on the filament discharged from the spinning nozzle was supplied to the coagulating liquid in the coagulation bath (coagulating liquid with a concentration of 75 wt% water and 25 wt% NMMO and at a temperature of about 25°C) through the air gap section. In this regard, the cooling air in the air gap section first coagulates the spinning dope at a temperature of 8°C and an air flow rate of 200 N $m^3$/h. Additionally, the concentration of the coagulating liquid was continuously monitored using a sensor and a refractometer.

Then, the coagulated lyocell filament was washed. Specifically, the filament was introduced into a towing roller, and the remaining NMMO in the filament was removed using the washing liquid sprayed from a washing device. Then, the washed filament was immersed in a bath designed to have an oil concentration of 2 wt%.

The filament was treated at a pressure of 2 kgf/$cm^2$ using a nip roll installed in the bath discharge section, and was put into a crimp machine to provide wrinkles. In some embodiments, the crimp application ratio (crimp draft ratio) was set to be 1.1 times, the steam pressure was supplied to the steam box at 0.5 kgf/$cm^2$, the pressure of the crimp machine roller was 2.5 kgf/$cm^2$, and the pressure of the adjustment blade (doctor blade) was set to be 0.5 kgf/$cm^2$ to manufacture the tow. In this regard, the crimp application ratio is calculated as described above.

The manufactured tow was subjected to a second oil treatment to prevent static electricity and provide flexibility, and immediately after the second oil treatment, the resultant tow was passed through a continuous dryer set at 120°C to obtain a dry tow product. In this regard, the total fineness of the tow is as listed in Table 1.

Example 2

Lyocell tow for a filter for a cigarette was manufactured in the same manner as in Example 1, except that the single fineness of the filament was 5.0 denier and the crimp application ratio was adjusted to be 1.05 times. In this regard, the total fineness of the tow is as listed in Table 1.

Example 3

Lyocell tow for a filter for a cigarette was manufactured in the same manner as in Example 1, except that the single fineness of the filament was 5.0 denier and the crimp application ratio was adjusted to be 1.2 times. In this regard, the total fineness of the tow is as listed in Table 1.

**Comparative Example 1**

Lyocell tow for a filter for a cigarette was manufactured in the same manner as in Example 1, except that the single fineness of the filament was 4.0 denier and the crimp application ratio was adjusted to be 1.0 times. In this regard, the total fineness of the tow is as listed in Table 1.

**Comparative Example 2**

Lyocell tow for a filter for a cigarette was manufactured in the same manner as in Example 1, except that the single fineness of the filament was 4.0 denier and the crimp application ratio was adjusted to be 1.35 times. In this regard, the total fineness of the tow is as listed in Table 1.

**Comparative Example 3**

Lyocell tow for a filter for a cigarette was manufactured in the same manner as in Example 1, except that the single fineness of the filament was 4.0 denier and the crimp application ratio was adjusted to be 1.5 times. In this regard, the total fineness of the tow is as listed in Table 1.

**Comparative Example 4**

Lyocell tow for a filter for a cigarette was manufactured in the same manner as in Example 1, except that the single fineness of the filament was 8.5 denier. In this regard, the total fineness of the tow is as listed in Table 1.

**Examples and Comparative Examples Evaluation or measurement of tow**

The following items were measured or evaluated for Examples and Comparative Examples, and the results are listed in Table 1.

**Tow fineness (denier)**

Tow to be measured was collected as a 2 m sample, and left in a room with constant temperature and humidity at the temperature of 20°C and the humidity of 65% for 24 hours, and stabilized. One end of the stabilized tow was fixed, and a weight of 2 kg was attached to the other end thereof. The tow in the stretched state due to the load was maintained (stabilized) for 5 seconds, then cut into 90 cm to obtain a sample, and the weight of the sample was measured (total fineness). The fineness was calculated according to the denier conversion method: the measured weight $\times$ 10000. The single fineness was calculated by dividing the total fineness by the number of strands in the filament.

**2. Number of Crimps**

Measurement was made according to KS K 0326 standard. Specifically, a 20-strand tow sample with intact crimp was prepared, and a previously prepared piece of polished paper (space distance of 25 mm) was attached thereto using celluloid 4% to 5% amyl acetate adhesive in such a manner that each strand of single fiber was stretched by 25 $\pm$ 5%, and then left untouched to dry the adhesive.

In addition, with respect to this sample, a crimp tester was used to apply an initial load equivalent to 1.96/1000 cN (=2 mgf) per 1 De for each strand, and the number of crimps between 25 mm was counted. In addition, the upper and lower limits of the number of crimps measured for 20 strands were described.

**3. Shape of Crimp**

To identify the crimp shape, sampling was made in the same manner as the crimp number measurement, and then the shape which had been confirmed with an optical microscope, was confirmed through the naked eye. In some embodiments, it was confirmed whether the crimp was formed consistently and uniformly in the width direction of the sample, and the crimp was classified as follows:

Good: When the crimp is formed consistently and uniformly in the width direction of the sample.

Bad: When the crimp is not formed consistently and uniformly along the width of the sample.

**4. Processability for manufacturing filter for cigarette**

Tow was introduced into a cigarette filter manufacturing facility to confirm the maintainability of the process up to the point when all samples of one batch were exhausted.

**5. draw resistance and circumference of filter for cigarette**

A cigarette filter rod was manufactured using the tow prepared through Examples and Comparative Examples (Rod weight: 650 mg). In some embodiments, the lyocell tow prepared in Examples and Comparative Examples was surrounded with a wrapper (6,500 CU porous paper), and a cylindrical filter rod with an axial length of 120 mm and a circumference as shown in the table below was manufactured.

In addition, the draw resistance of each rod was measured using a draw resistance and circumference measuring device in accordance with the KS H ISO 6565 standard.

[Table 1]

| | Tow fineness (denier) | Tow crimp Number (ea/ inch) | Shape of crimp | Processability for manufacturing cigarette filter | Filter draw resistance (mmH$_2$O) | Filter circumfer ence (mm) |
|---|---|---|---|---|---|---|
| Example 1 | 16,500 | 34 to 38 | Good | Good (no cutting) | 458 to 478 | 16.9 |
| Example 2 | 17,200 | 32 to 36 | Good | Good (no cutting) | 450 to 470 | 16.7 |
| Example 3 | 19,000 | 30 to 34 | Good | Good (no cutting) | 448 to 468 | 16.7 |
| Comparati ve Example 1 | Unable to manufacture | Not measurable | - | - | - | - |
| Comparati ve Example 2 | 13,500 | 34 to 52 | Bad | Bad (continuous manufacturing is impossible due to cutting) | 360 to 400 | 16.1 |
| Comparati ve Example 3 | 14,300 | 32 to 50 | Bad | Bad (continuous manufacturing is impossible due to cutting) | 350 to 380 | 16.9 |
| Comparati ve Example 4 | 35,800 | 15 to 20 | Bad | Bad (continuous manufacturing is impossible due to cutting) | 250 to 300 | 17.5 |

As seen in Table 1, in Examples in which the tow manufacturing conditions are controlled according to the specific embodiments of the present application, crimps are formed in an appropriate number and uniformly at an appropriate level, it is confirmed that the manufacturing process of the cigarette filter is good, and the draw resistance of the filter can be improved.

In some embodiments, in the case of Comparative Example 1, the tow manufacturing conditions were not appropriate so that the tow could not be manufactured and the performance of the filter could not be confirmed. In the case of Comparative Examples 2 to 4, the tow could be manufactured, but the shape of the tow was poor and the number of crimps was not uniform. As a result, processability was not good even when manufacturing cigarette filters, and the performance (draw resistance) of the filter compared to Examples was also worse than that of Examples.

**Claims**

**1.** A method of manufacturing a lyocell material for a filter for a cigarette, the method comprising:

    spinning lyocell dope;
    coagulating spun lyocell dope to obtain a lyocell multifilament;
    treating the lyocell multifilament with an oil; and
    a crimp application process of putting the lyocell multifilament which has been treated with an oil into a crimp machine so that steam and roller pressure are applied to the lyocell multifilament, wherein
    a single fineness of filaments constituting the lyocell multifilament is greater than 4.0 denier and not more than 8.0 denier, and
    the crimp application process is performed to satisfy a crimp draft ratio expressed by Expression 1 below:

Expression 1

$$1.01 \leq \text{crimp draft ratio} \leq 1.30$$

wherein, in Expression 1, the crimp draft ratio is calculated as $V_1/V_0$, wherein $V_0$ is a movement speed of a filament before an oil-treated multifilament is input into a crimp machine, and Vi is a passing speed of a filament gripped by a roller in the crimp machine.

2. The method of manufacturing a lyocell material for a filter for a cigarette of claim 1, wherein the method is performed while controlling one or more spinning conditions of a discharge amount and a spinning speed of the spinning dope so that the single fineness of filaments constituting the lyocell multifilament is greater than 4.0 denier and not more than 8.0 denier.

3. The method of manufacturing a lyocell material for a filter for a cigarette of claim 1, wherein the crimp application process is performed while applying a steam of 0.1 kgf/cm$^2$ to 2.0 kgf/cm$^2$ to the multifilament introduced into the crimp machine.

4. The method of manufacturing a lyocell material for a filter for a cigarette of claim 3, wherein the crimp application process is performed while applying a pressure of 1.5 kgf/cm$^2$ to 4.0 kgf/cm$^2$ to the multifilament introduced into the crimp machine by using a roller.

5. The method of manufacturing a lyocell material for a filter for a cigarette of claim 4, wherein the crimp application process is performed by applying, by using a doctor blade, a pressure of 0.1 kgf/cm$^2$ to 2.0 kgf/cm$^2$ to the multifilament that has passed through the roller of the crimp machine.

6. The method of manufacturing a lyocell material for a filter for a cigarette of claim 1, wherein the spinning of the dope is performed while spinning a lyocell spinning dope including cellulose pulp and N-methylmorpholine-oxide (NMMO).

7. The method of manufacturing a lyocell material for a filter for a cigarette of claim 1, wherein the coagulation in the obtaining of the lyocell multifilament includes: a first coagulation process of supplying cooling air to the spun lyocell dope; and a second coagulation process of coagulating first-coagulated spinning dope by adding the same to a coagulating liquid.

8. The method of manufacturing a lyocell material for a filter for a cigarette of claim 7, wherein the first coagulation process is performed while supplying air at a temperature of 15 °C or lower to the lyocell dope spun at an air flow rate of 70 Nm$^3$/h to 300 Nm$^3$/h.

9. The method of manufacturing a lyocell material for a filter for a cigarette of claim 7, wherein the second coagulation process is performed by adding first-coagulated spinning dope to a coagulating liquid at a temperature of 30 °C or lower.

10. The method of manufacturing a lyocell material for a filter for a cigarette of claim 1, further comprising washing a coagulated lyocell multifilament, after the obtaining of the multifilament and before the treating with an oil.

11. The method of manufacturing a lyocell material for a filter for a cigarette of claim 1, wherein the method provides tow with 20 to 50 crimps per inch.

12. The method of manufacturing a lyocell material for a filter for a cigarette of claim 11, wherein the method provides tow with a total fineness of 15,000 to 35,000 denier.

13. A lyocell material for a filter for a cigarette, the lyocell material comprising

crimped tow manufactured by putting the same into a crimp machine so that crimps are applied under conditions satisfying a crimp draft ratio expressed by Expression 1 below,
the crimped tow has 20 to 50 crimps per inch,
and a total fineness of 15,000 denier to 35,000 denier:

$$\text{Expression 1}$$

$$1.01 \leq \text{crimp draft ratio} \leq 1.30$$

wherein, in Expression 1, the crimp draft ratio is calculated as $V_1/V_0$, wherein $V_0$ is a movement speed of a filament before a multifilament is input into a crimp machine, and Vi is a passing speed of a filament gripped by a roller in the crimp machine.

**14.** A method of manufacturing a filter for a cigarette, the method comprising:

spinning lyocell dope;
coagulating spun lyocell dope to obtain a lyocell multifilament;
treating the lyocell multifilament with an oil;
a crimp application process of putting the lyocell multifilament which has been treated with an oil into a crimp machine so that steam and roller pressure are applied to the lyocell multifilament, and
manufacturing a filter using tow to which crimp has been applied, wherein
a single fineness of filaments constituting the lyocell multifilament is greater than 4.0 denier and not more than 8.0 denier, and
the crimp application process is performed to satisfy a crimp draft ratio expressed by Expression 1 below:

$$\text{Expression 1}$$

$$1.01 \leq \text{crimp draft ratio} \leq 1.30$$

wherein, in Expression 1, the crimp draft ratio is calculated as $V_1/V_0$, wherein $V_0$ is a movement speed of a filament before the oil-treated multifilament is input into a crimp machine, and Vi is a passing speed of the filament gripped by a roller in the crimp machine.

**15.** The method of manufacturing a filter for a cigarette of claim 14, wherein

the method provides a filter for a cigarette, having a draw resistance of at least 375 mmH$_2$O measured according to KS H ISO 6565, wherein
the draw resistance is measured when a filter rod with a circumference of 10 mm to 30 mm is manufactured.

**16.** The method of manufacturing a filter for a cigarette of claim 15, wherein

the method provides a filter for a cigarette, having a draw resistance of 810 mmH$_2$O or less measured according to KS H ISO 6565, wherein
the draw resistance is measured when a filter rod with a circumference of 10 mm to 30 mm is manufactured.

**17.** A filter for a cigarette, the filter comprising:

a lyocell material, wherein
the lyocell material is crimped tow manufactured by inputting the same into a crimp machine so that crimps are applied under conditions that satisfy a crimp draft ratio expressed by Expression 1, wherein
the tow has 20 to 50 crimps per inch and a total fineness of 15,000 denier to 35,000 denier:

$$\text{Expression 1}$$

$$1.01 \leq \text{crimp draft ratio} \leq 1.30$$

wherein, in Expression 1, the crimp draft ratio is calculated as $V_1/V_0$, wherein $V_0$ is a movement speed of a filament before a multifilament is input into a crimp machine, and Vi is a passing speed of the filament gripped by a roller in the crimp machine.

**18.** The filter for a cigarette of claim 17, having a draw resistance measured according to KS H ISO 6565 of at least 375 mmH$_2$O, wherein

the draw resistance is measured when a filter rod with a circumference of 10 mm to 30 mm is manufactured.

19. The filter for a cigarette of claim 17, having a draw resistance measured according to KS H ISO 6565 of 810 mmH$_2$O or less, wherein
the draw resistance is measured when a filter rod with a circumference of 10 mm to 30 mm is manufactured.

20. The filter for a cigarette of claim 18 or claim 19, having a circumference of 19 mm or less.

<table>
<tr><td colspan="2" align="center">**INTERNATIONAL SEARCH REPORT**</td><td colspan="2">International application No.<br>**PCT/KR2022/021313**</td></tr>
</table>

**A. CLASSIFICATION OF SUBJECT MATTER**

**A24D 3/06**(2006.01)i; **D01F 2/00**(2006.01)i; **D01D 5/06**(2006.01)i; **D01D 5/22**(2006.01)i; **B01D 39/18**(2006.01)i; **A24D 3/08**(2006.01)i

According to International Patent Classification (IPC) or to both national classification and IPC

**B. FIELDS SEARCHED**

Minimum documentation searched (classification system followed by classification symbols)

A24D 3/06(2006.01); A24B 15/167(2020.01); A24D 3/02(2006.01); A24D 3/04(2006.01); A24D 3/10(2006.01); A24F 40/57(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이오셀 (lyocell), 필터 (filter), 필라멘트 (filament), 코팅 (coating), 크림프 (crimp), 압력 (pressure)

**C. DOCUMENTS CONSIDERED TO BE RELEVANT**

| Category* | Citation of document, with indication, where appropriate, of the relevant passages | Relevant to claim No. |
|---|---|---|
| X | KR 10-2016-0081726 A (KOLON INDUSTRIES, INC. et al.) 08 July 2016 (2016-07-08)<br>See paragraphs [0045]-[0049]; and claims 1-9. | 1-20 |
| A | KR 10-2017-0075849 A (KOLON INDUSTRIES, INC. et al.) 04 July 2017 (2017-07-04)<br>See entire document. | 1-20 |
| A | KR 10-2016-0041664 A (KT & G CORPORATION et al.) 18 April 2016 (2016-04-18)<br>See entire document. | 1-20 |
| A | US 2019-0075842 A1 (CAENEN, P.) 14 March 2019 (2019-03-14)<br>See entire document. | 1-20 |
| A | US 2021-0315255 A1 (NICOVENTURES TRADING LIMITED) 14 October 2021 (2021-10-14)<br>See entire document. | 1-20 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 March 2023** | **20 March 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/021313**

| Patent document cited in search report | | | Publication date (day/month/year) | Patent family member(s) | | | Publication date (day/month/year) |
|---|---|---|---|---|---|---|---|
| KR | 10-2016-0081726 | A | 08 July 2016 | CN | 107109707 | A | 29 August 2017 |
| | | | | CN | 107109707 | B | 07 April 2020 |
| | | | | EP | 3241452 | A1 | 08 November 2017 |
| | | | | EP | 3241452 | A4 | 15 August 2018 |
| | | | | JP | 2018-504897 | A | 22 February 2018 |
| | | | | JP | 6535742 | B2 | 26 June 2019 |
| | | | | KR | 10-2211186 | B1 | 03 February 2021 |
| | | | | US | 10617146 | B2 | 14 April 2020 |
| | | | | US | 2018-0007952 | A1 | 11 January 2018 |
| | | | | WO | 2016-108508 | A1 | 07 July 2016 |
| KR | 10-2017-0075849 | A | 04 July 2017 | KR | 10-2296584 | B1 | 01 September 2021 |
| KR | 10-2016-0041664 | A | 18 April 2016 | KR | 10-1691543 | B1 | 09 January 2017 |
| US | 2019-0075842 | A1 | 14 March 2019 | CN | 111201342 | A | 26 May 2020 |
| | | | | EP | 3679182 | A1 | 15 July 2020 |
| | | | | JP | 2020-533496 | A | 19 November 2020 |
| | | | | KR | 10-2020-0047672 | A | 07 May 2020 |
| | | | | WO | 2019-049086 | A1 | 14 March 2019 |
| US | 2021-0315255 | A1 | 14 October 2021 | EP | 4135536 | A1 | 22 February 2023 |
| | | | | KR | 10-2023-0004565 | A | 06 January 2023 |
| | | | | WO | 2021-209903 | A1 | 21 October 2021 |

Form PCT/ISA/210 (patent family annex) (July 2022)

**EP 4 437 866 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210190179